# EUROPEAN PATENT SPECIFICATION

(11) **EP 1 455 345 B1**
(45) Date of publication and mention of the grant of the patent: **27.04.2011**
(21) Application number: 03258212.4
(22) Date of filing: 23.12.2003
(51) Int. Cl.: G10L 21/02, G10L 19/14, H04N 7/26

(54) **Method and apparatus for encoding and/or decoding digital data using bandwidth extension technology**
Verfahren und Vorrichtung zur Codierung und/oder Decodierung digitaler Daten mittels der Technik der Bandbreitenerweiterung
Procédé et dispositif pour le codage et/ou le décodage des données numériques à l'aide de la technique d'extension de largeur de band

(30) Priority: 07.03.2003 KR 2003014485
(43) Date of publication of application: 08.09.2004
(73) Proprietor: SAMSUNG ELECTRONICS CO., LTD., Suwon-si, Gyeonggi-do 442-742 (KR)
(72) Inventor: Kim, Jung-hoe, Seoul (KR); Kim, Sang-wook, Seocho-gu, Seoul (KR)
(74) Representative: Greene, Simon Kenneth

(56) References cited:
- EP-A- 0 918 407
- EP-A- 1 037 196
- WO-A-98/57436
- WO-A-98/57436
- PARK S-H ET AL: "MULTI-LAYER BIT-SLICED BIT-RATE SCALABLE AUDIO CODING" PREPRINTS OF PAPERS PRESENTED AT THE AES CONVENTION, XX, XX, vol. 103, page 16 XP009016481
- QUACKENBUSH S R: "Coding of natural audio in MPEG-4" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 3797-3800, XP010279596 ISBN: 0-7803-4428-6
- "TEXT OF ISO/IEC 14496-3:2001/FPDAM 1, BANDWIDTH EXTENSIONS" ISO/IEC JTC1/SC29/WG11 N5203, XX, XX, October 2002 (2002-10), pages 1-90, XP001124389
- S-H PARK, Y-B KIM, S-W KIM, Y-S SEO: "MULTI-LAYER BIT-SLICED BIT-RATE SCALABLE AUDIO CODING" PREPRINTS OF PAPERS PRESENTED AT THE AES CONVENTION, vol. 3, pages 1-16,

## Description

The present invention relates to encoding and decoding of digital data, and more particularly, to a method and apparatus for encoding and decoding digital data using bandwidth extension technology.

As digital signal processing technologies advance, audio signals are mostly stored and played back as digital data. Digital audio storage and/or playback devices sample and quantize analog audio signals, transform the analog audio signals into pulse code modulation (PCM) audio data, which is a digital signal, and store the PCM audio data in an information storage medium such as a compact disc (CD), a digital versatile disc (DVD), or the like, so that a user can play back data from the information storage medium when he/she desires to listen to the PCM audio data. Digital audio signal storage and/or reproduction methods considerably improve sound quality and remarkably reduce the deterioration of sound caused by long storage periods compared to analog audio signal storage and/or reproduction methods used on a long-play (LP) record, a magnetic tape, or the like. However, the large amount of digital data sometimes poses a problem for storage and transmission.

In order to solve these problems, a wide variety of compression technologies for reducing the amount of digital audio data are used. Moving Picture Expert Group audio standards drafted by the International Standard Organization (ISO) or AC-2/AC-3 technologies developed by Dolby adopt a method of reducing the amount of data using a psychoacoustic model, which results in an effective reduction in the amount of data regardless of the characteristics of signals. In other words, MPEG audio standards and AC-2/AC-3 technologies provide almost the same sound quality as a CD only at a bit rate of 64Kbps - 384Kbps, that is, at 1/6 - 1/8 that of existing digital encoding technologies.

However, all these technologies comply with a method of detecting, quantizing, and encoding digital data in an optimum state at a fixed bit rate. Thus, when digital data is transmitted via a network, a transmission bandwidth may be reduced due to poor network conditions. Also, the network may be disconnected, such that network service is not available. Also, when digital data is transformed into a smaller bitstream so as to be suitable for mobile devices having a limited storage capacity, re-encoding should be performed to reduce the amount of data. To achieve this, a considerable amount of calculation is required.

For this reason, the present applicant filed an application for "Bit Rate Scalable Audio Encoding and/or Decoding Method and Apparatus Using Bit-Sliced Arithmetic Coding (BSAC) Technology" as Korean Patent Application No. 97-61298 on November 19, 1997 in the Korean Intellectual Property Office and has been granted Korean Patent Registration No. 261253 on April 17, 2002. European family members of this case are EP869620 and EP884850. According to BSAC technology, a bitstream, which has been encoded at a high bit rate, can be transformed into a bitstream having low bit rate. Since restoring can be achieved using only a portion of a bitstream, even if a network is overloaded, the performance of a decoder is poor, or a user demands a low bit rate, the user can be provided with service at moderate sound quality using only a portion of the bitstream (though the performance of the decoder may deteriorate as much as low bit rate). Nevertheless, at the lowered bit rate, the performance of the decoder is unavoidably degraded.

WO 98/57436 describes spectral-based replication. In an embodiment, spectral envelope information is extracted in the encoder and multiplexed with lowband samples or coefficients.

Another document describing coding is provided in Quackenbush, "Coding of natural audio in MPEG-4", Proceedings of the 1998 IEEE international Conference of Acoustics, Speech and Signal Processing, (1998) pages 3797 to 3800.

According to an aspect of the present invention, there is provided a method of encoding digital data according to claim 1.

In another aspect there is provided a method of decoding data according to claim 4.

According to yet another aspect of the present invention, there is provided an apparatus for encoding digital data according to claim 7.

In another aspect, there is provided an apparatus for decoding data according to claim 10.

In all aspects the data may be audio data.

The present invention thus provides a digital data encoding and/or decoding method and apparatus capable of controlling the bit rate of digital data such that even though restoring is carried out using only a portion of a bitstream, high quality sound can be reproduced.

The above and other features and advantages of the present invention will become more apparent by describing in detail exemplary embodiments thereof with reference to the attached drawings in which:
FIG. 1 is a block diagram of an encoding apparatus according to the present invention;
FIG. 2 is a block diagram of an encoding apparatus according to an embodiment of the present invention;
FIG. 3 illustrates an example of the realization of the encoding apparatus shown in FIG. 2;
FIG. 4 is a block diagram of a decoding apparatus according to the present invention;
FIG. 5 is a block diagram of a decoding apparatus according to an embodiment of the present invention;
FIG. 6 illustrates an example of the realization of the decoding apparatus shown in FIG. 5;
FIG. 7 illustrates the structure of a bitstream output from a fine grain scalability (FGS) encoder 2;
FIG. 8 illustrates the detailed structure of side information shown in FIG. 7;
FIG. 9 illustrates the structure of a bitstream output from a multiplexer 3;
FIG. 10 is a referential view for explaining bandwidth extension decoding performed by a bandwidth extension (BWE) decoder 9 in more detail;
FIG. 11 is a flowchart for explaining an encoding method according to the present invention;
FIG. 12 is a flowchart for explaining an encoding method according to an embodiment of the present invention;
FIG. 13 is a flowchart for explaining a decoding method according to the present invention; and
FIG. 14 is a flowchart for explaining a decoding method according to an embodiment of the present invention.

Hereinafter, preferred embodiments of the present invention will be described in detail with reference to the attached drawings.

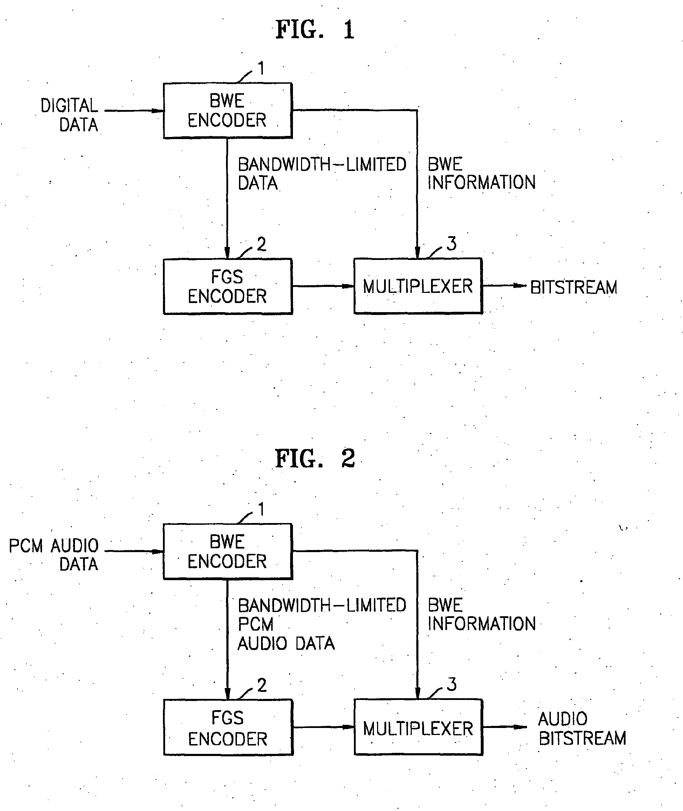

FIG. 1 is a block diagram of an encoding apparatus according to the present invention. Referring to FIG. 1, the encoding apparatus, which encodes digital data and outputs the digital data as a bitstream, includes a bandwidth extension (BWE) encoder 1, a fine grain scalability (FGS) encoder 2, and a multiplexer 3.

The BWE encoder 1 BWE-encodes digital data, outputs bandwidth-limited digital data, and generates BWE information. BWE encoding refers to a technique for receiving digital data, slicing off a portion of the digital data in a high frequency band, and generating side information necessary for restoring the sliced portion of the digital data. Here, the remaining portion of the digital data is called "bandwidth-limited data" and the side information is called "BWE information". An example of a BWE technique is a Spectral Band Replication (SBR) technology developed by Coding Technologies. The details of the SBR technology are disclosed in the "Convention Paper 5560" presented at the 112^{th} Convention of Audio Engineering Society held on May 10-13, 2002.

The FGS encoder 2 encodes the bandwidth-limited digital data into a hierarchical structure having a base layer and at least one enhancement layer so as to control a bit rate. FGS encoding refers to a technique for encoding data into a structure having a plurality of layers so as to control a bit rate, i.e., provide FGS. The BSAC technology disclosed in Korean Patent Application No. 97-61298 is an example of FGS coding.

The multiplexer 3 multiplexes the bandwidth-limited digital data encoded by the FGS encoder 2 and the BWE information generated by the BWE encoder 1.

FIG. 2 is a block diagram of an encoding apparatus according to an embodiment of the present invention. Referring to FIG. 2, the encoding apparatus, which receives and encodes PCM audio data, and then outputs an audio bitstream, includes a BWE encoder 1, a FGS encoder 2, and a multiplexer 3. Compared to the encoding apparatus shown in FIG. 1, the encoding apparatus shown in FIG. 2 is characterized by processing audio data. Blocks performing the same functions as those shown in FIG. 1 are denoted by the same reference numerals, and thus repeated descriptions will be omitted.

The BWE encoder 1 BWE-encodes PCM audio data, outputs bandwidth-limited PCM audio data, and generates BWE information. The FGS encoder 2 encodes the bandwidth-limited PCM audio data into a hierarchical structure having a base layer and at least one enhancement layer so as to control a bit rate. In other words, the FGS encoder 2 differentially encodes side information corresponding to the base layer, bit-sliced-encodes a plurality of quantization samples corresponding to the base layer, differentially encodes side information corresponding to a next enhancement layer until a plurality of predetermined layers are completely encoded, and bit-sliced-encodes a plurality of quantization samples corresponding to the next enhancement layer. Here, the side information contains scale factor information and coding model information, and the quantization samples are obtained by transforming and quantizing input digital data. The side information and the quantization samples will be explained in detail later. The multiplexer 3 multiplexes the bandwidth-limited PCM audio data encoded by the FGS encoder 2 and the BWE information generated by the BWE encoder 1.

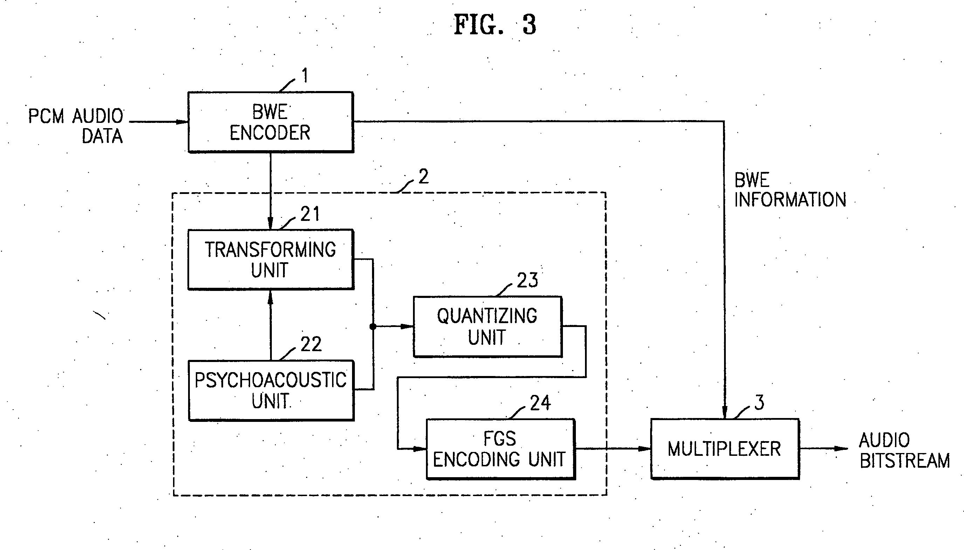

FIG. 3 illustrates an example of the realization of the encoding apparatus shown in FIG. 2. Referring to FIG. 3, the encoding apparatus includes a BWE encoder 1, a FGS encoder 2, and a multiplexer 3. Blocks performing the same functions as those shown in FIG. 2 are denoted by the same reference numerals, and thus repeated descriptions will be omitted.

In particular, the FGS encoder 2 includes a transforming unit 21, a psychoacoustic unit 22, and a quantizing unit 23, and a FGS encoding unit 24. The transforming unit 21 receives PCM audio data that is an audio signal in the time domain and transforms the PCM audio data into an audio signal in the frequency domain with reference to psychoacoustic model information provided by the psychoacoustic unit 22. The characteristics of audio signals able to be perceived by humans, hereinafter referred to as perceptual audio signals, are not much different in the time domain. In contrast, the characteristics of perceptual and unperceptual audio signals in the frequency domain are much different considering the psychoacoustic model. Thus, compression efficiency can be improved by assigning a different number of bits to each frequency band.

The psychoacoustic unit 22 provides information on a psychoacoustic model such as attack detection information or the like to the transforming unit 21, packs the audio signal transformed by the transforming unit 21 into sub-band audio signals, calculates a masking threshold for each of the sub-bands using a masking effect resulting from the interaction among the sub-band signals, and provides the masking threshold to the quantizing unit 23. The masking threshold indicates the maximum power of an audio signal that human cannot perceive due to the interaction between audio signals. In the present embodiment, the psychoacoustic unit 22 calculates a masking threshold and the like for stereo components using Binaural Masking Level Depression (BMLD).

The quantizing unit 23 scalar-quantizes each of the sub-band audio signals based on corresponding scale factor information to reduce quantization noise power in each of the sub-bands to be less than the masking threshold provided by the psychoacoustic unit 22 and then outputs quantization samples, so that a human can hear the sub-band audio signals but not perceive the quantization noise therein. In other words, the quantizing unit 23 quantizes the sub-band audio signals in such a way that a noise-to-mask ratio (NMR), indicating a ratio of noise generated in each sub-band to the masking threshold calculated by the psychoacoustic unit 22, in full-bandwidth is 0dB or less. An NMR of 0dB or less indicates that a human cannot hear quantization noise.

The FGS encoding unit 24 encodes quantization samples and side information belonging to each layer into a hierarchical structure. The side information contains scale band information, coding band information, scale factor information, and coding model information corresponding to each layer. The scale band information and the coding band information may be packed as header information and then transmitted to a decoding apparatus. Alternatively, the scale band information and the coding band information may be encoded and packed as side information corresponding to each layer and then transmitted to the decoding apparatus. Also, since scale band information and coding band information is already stored in the decoding apparatus, the scale band information and the coding band information may not be transmitted to the decoding apparatus.

In more detail, the FGS encoding unit 24 encodes side information containing scale factor information and coding model information corresponding to a first layer while bit-sliced-encoding quantization samples corresponding to the first layer with reference to the coding model information. The bit-sliced-encoding indicates coding used in the above-described BSAC and sequentially lossless-encodes most significant bits, next significant bits, ..., and least significant bits. A second layer undergoes the same process as the first layer. In other words, a plurality of predetermined layers are sequentially encoded layer by layer until they are completely encoded. The first layer is named a base layer and the remaining layers are named enhancement layers. A more detailed description of the hierarchical structure will be provided later.

The scale band information is necessary for properly performing quantization depending on the frequency characteristics of an audio signal and informs each layer of a scale band corresponding thereto when a frequency domain is divided into a plurality of bands and each of the bands is assigned a proper scale factor. As a result, each layer belongs to at least one scale band. Each scale band is assigned one scale factor. The coding band information is necessary for properly carrying out encoding depending on the frequency characteristics of an audio signal and informs each layer of an encoding band corresponding thereto when a frequency domain is divided into a plurality of bands and each of the bands is assigned a proper coding model. The scale bands and the encoding bands are properly divided by tests, and then scale factors and coding models corresponding thereto are determined.

The multiplexer 3 multiplexes the bandwidth-limited audio data and the BWE information in such an order that data of the encoded quantization samples corresponding to the base layer is located, BWE information is located, and data of the encoded quantization samples corresponding to the remaining enhancement layers is located or in such an order that BWE information is located, data of the encoded quantization samples corresponding to the base layer is located, and data of the encoded quantization samples corresponding to the remaining enhancement layers is located.

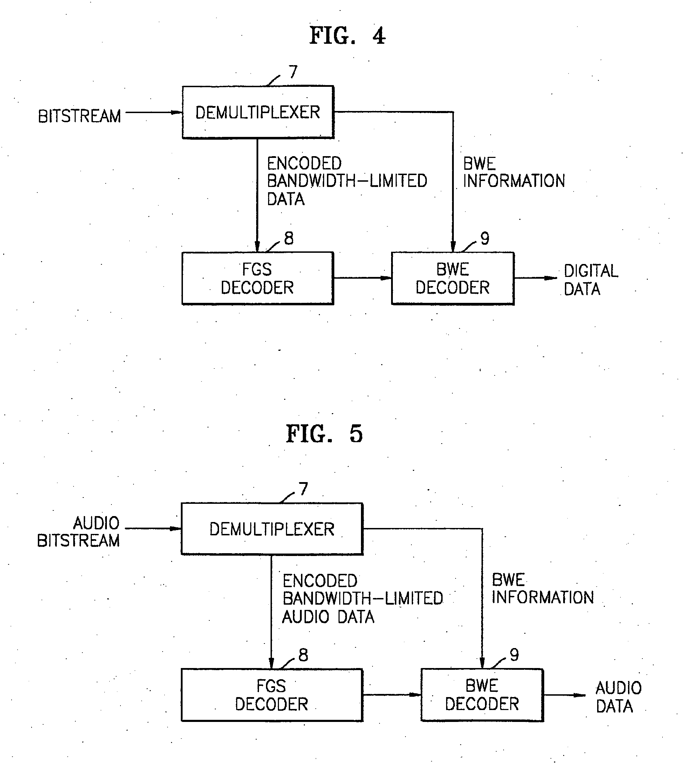

FIG. 4 is a block diagram of a decoding apparatus according to the present invention. Referring to FIG. 4, the decoding apparatus, which decodes a bitstream and then outputs digital data, includes a demultiplexer 7, a FGS decoder 8, and a BWE decoder 9.

The demultiplexer 7 demultiplexes an input bitstream to sample bandwidth-limited data, which has been encoded into a hierarchical structure having a base layer and at least one enhancement layer, and BWE information therefrom. Here, the bandwidth-limited data and the BWE information is the same as that described with reference to FIG. 1. The FGS decoder 8 decodes at least a portion of the bandwidth-limited data sampled by the demultiplexer 7 corresponding to the base layer. The layer on which decoding is performed depends on the state of a network, a user's selection, or the like. Based on the portion of the bandwidth-limited data decoded by the FGS decoder 8 and with reference to the BWE information sampled by the demultiplexer 7, the BWE decoder 9 generates digital data in at least a portion of a band that is not covered by the bandwidth-limited data decoded by the FGS decoder 8 and then patches the generated digital data to the bandwidth-limited data decoded by the FGS decoder 8. Even if the band-limited data decoded by the FGS decoder 8 is only base band data, the BWE decoder 9 creates missing band data and patches the missing band data to the base band data. As a result, quality of the decoded portion of the bandwidth-limited data can be improved.

FIG. 5 is a block diagram of a decoding apparatus according to an embodiment of the present invention. Referring to FIG. 5, the decoding apparatus, which receives and decodes an audio bitstream, and then outputs audio data, includes a demultiplexer 7, a FGS decoder 8, and a BWE decoder 9. Compared to the decoding apparatus shown in FIG. 4, the decoding apparatus shown in FIG. 5 is characterized by processing audio data. Therefore, blocks carrying out the same functions as those of FIG. 4 are denoted by the same reference numerals, and thus repeated descriptions will be omitted.

The demultiplexer 7 demultiplexes an input audio bitstream to sample bandwidth-limited audio data, which has been encoded into a hierarchical structure having a base layer and at least one enhancement layer, and BWE information therefrom. The FGS decoder 8 decodes at least a portion of the bandwidth-limited audio data corresponding to the base layer. Based on the portion of the bandwidth-limited audio data decoded by the FGS decoder 8 and with reference to the BWE information sampled by the demultiplexer 7, the BWE decoder 9 generates audio data in at least a portion of a band that is not covered by the portion of bandwidth-limited audio data decoded by the FGS decoder 8 and then patches the generated audio data to the portion of the bandwidth-limited audio data decoded by the FGS decoder 8.

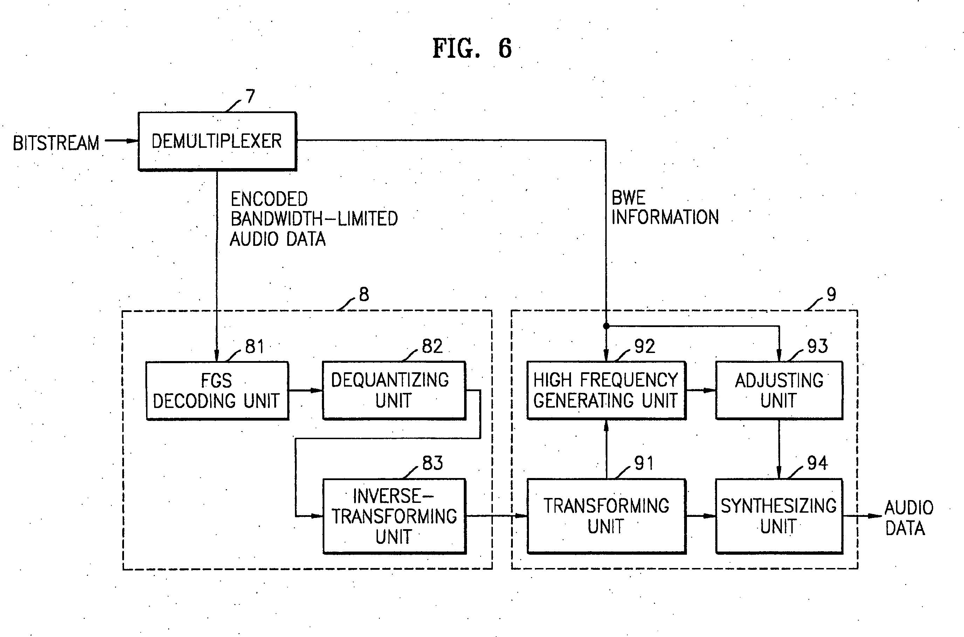

FIG. 6 illustrates an example of the realization of the decoding apparatus shown in FIG. 5. Referring to FIG. 6, the decoding apparatus includes a demultiplexer 7, a FGS decoder 8, and a BWE decoder 9. Blocks carrying out the same functions as those of FIG. 5 are denoted by the same reference numerals, and thus repeated descriptions will be omitted.

In particular, the FGS decoder 8 performs decoding up to a target layer that is determined depending on the state of a network, the performance of the decoding apparatus, a user's selection, and so forth in order to control a bit rate. The FGS decoder 8 includes a FGS decoding unit 81, a dequantizing unit 82, and an inverse-transforming unit 83. The FGS decoding unit 81 performs decoding up to a target layer of an audio bitstream. In more detail, the FGS decoding unit 81 lossless-decodes encoded quantization samples corresponding to each layer based on coding model information obtained by decoding side information containing scale factor information and coding model information corresponding to each layer in order to obtain quantization samples.

Scale band information and coding band information may be obtained from header information of the audio bitstream or may be obtained by decoding side information of each layer. Alternatively, the decoding apparatus may store scale band information and coding band information in advance. The dequantizing unit 82 dequantizes and reconstructs quantization samples of each layer based on scale factor information corresponding to each layer. The inverse-transforming unit 83 frequency/time-maps the reconstructed samples, transforms the mapped samples into time domain PCM audio data, and outputs the time domain PCM audio data.

The BWE decoder 9 includes a transforming unit 91, a high frequency generating unit 92, an adjusting unit 93, and a synthesizing unit 94. The transforming unit 91 transforms the time domain PCM audio data output from the inverse-transforming unit 83 into frequency domain data. The frequency domain data is referred to as a low frequency portion. The high frequency generating unit 92 generates a portion that is not covered by the frequency domain data, i.e., a high frequency portion by replicating the low frequency portion with reference to BWE information and then patching the replicated low frequency portion to the frequency domain data, i.e., the original low frequency portion. The adjusting unit 93 adjusts the level of the high frequency portion generated by the high frequency generating unit 92 using envelope information contained in the BWE information. The envelope information, which is transmitted from an encoding node, represents envelope information of audio data corresponding to a high frequency portion that is sliced by the encoding node during BWE encoding. The synthesizing unit 94 synthesizes the low frequency portion output from the transforming unit 91 and the high frequency portion output from the adjusting unit 93 and then outputs PCM audio data. As described above, although the FGS decoder 8 decodes only base band audio data, the BWE decoder 9 reconstructs missing band audio data and then patches the missing band audio data to the base band audio data. As a result, the quality of the base band audio data can be improved.

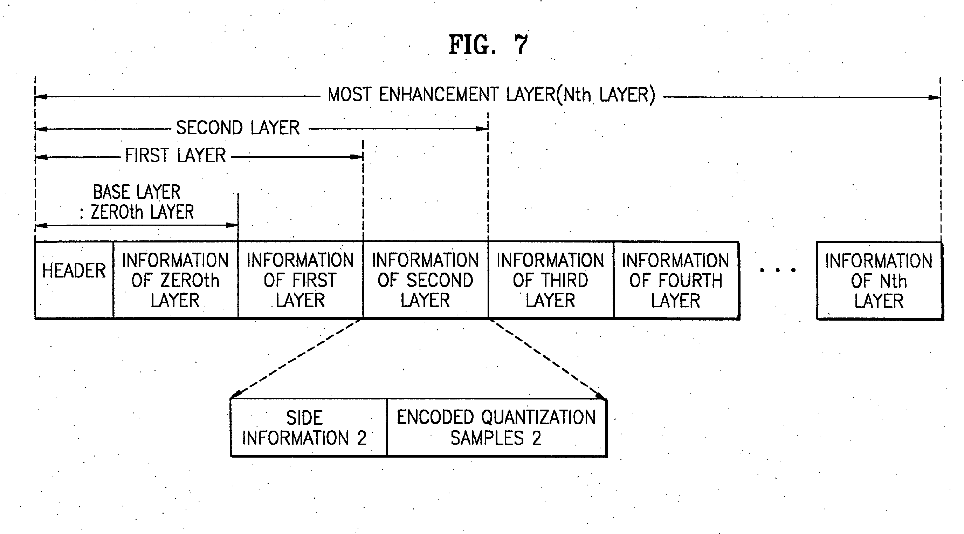

FIG. 7 illustrates the structure of a bitstream output from the FGS encoder 2. Referring to FIG. 7, the frame of a bitstream is encoded by the FGS encoder 2 by mapping quantization samples and side information into a hierarchical structure for fine grain scalability (FGS). In other words, the frame has a hierarchical structure in which a bitstream of a lower layer is included in a bitstream of an enhancement layer. Side information necessary for each layer is encoded on a layer-by-layer basis.

A header area in which header information is stored is located in the starting part of a bitstream, information of a zero^{th} layer is packed, and information of first through N^{th} layers that are enhancement layers is sequentially packed. A base layer ranges from the header area to the information of the zero^{th} layer, a first layer ranges from the header area to the information of the first layer, and a second layer ranges from the header area to the information of the second layer. In the same manner, the most enhancement layer ranges from the header area to the information of the N^{th} layer, i.e., from the base layer to the N^{th} layer. Side information and encoded data is stored as information of each layer. For example, side information 2 and encoded quantization samples are stored as the information of the second layer. Here, **N** is an integer that is greater than or equal to "1".

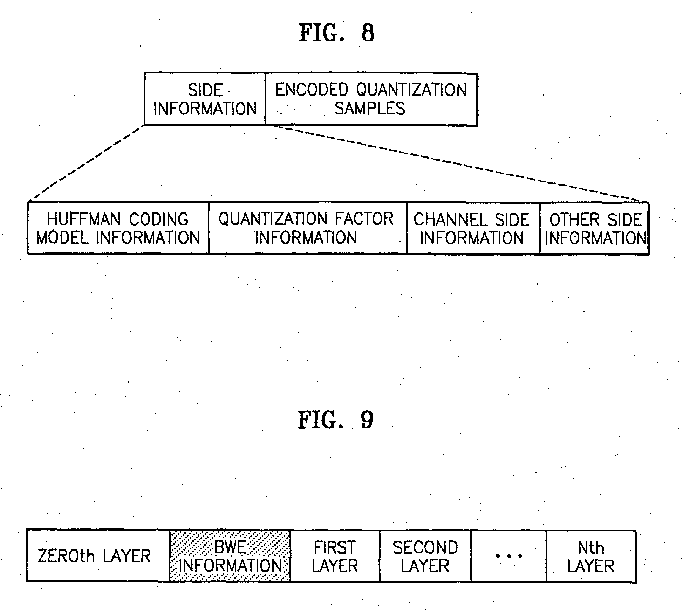

FIG. 8 illustrates the detailed structure of the side information shown in FIG. 7. Referring to FIG. 8, side information and encoded quantization samples are stored as information of an arbitrary layer. In the present embodiment, if Huffman encoding is performed as lossless-encoding, side information contains Huffman coding model information, quantization factor information, channel side information, and other side information. Huffman coding model information refers to index information of a Huffman coding model to be used for encoding or decoding quanitzation samples contained in a corresponding layer. The quantization factor information informs a corresponding layer of the size of a quantizing step suitable for quantizing or dequantizing audio data contained in the corresponding layer. The channel side information refers to information on a channel such as middle/side (M/S) stereo. The other side information is flag information indicating whether the M/S stereo is used.

FIG. 9 illustrates the structure of a bitstream output from the multiplexer 3. Referring to FIG. 9, a zero^{th} layer, which is a base layer encoded by the FGS encoder 2, is located in the starting part of the bitstream, BWE information is located after the zero^{th} layer, and enhancement layers, i.e., a first layer, a second layer, ..., and an N^{th} layer, are located after the BWE information. Although a decoding node receives or decodes only the information of the base layer, the decoding node can create missing layer information based on the decoded data of the base layer and with reference to the BWE information.

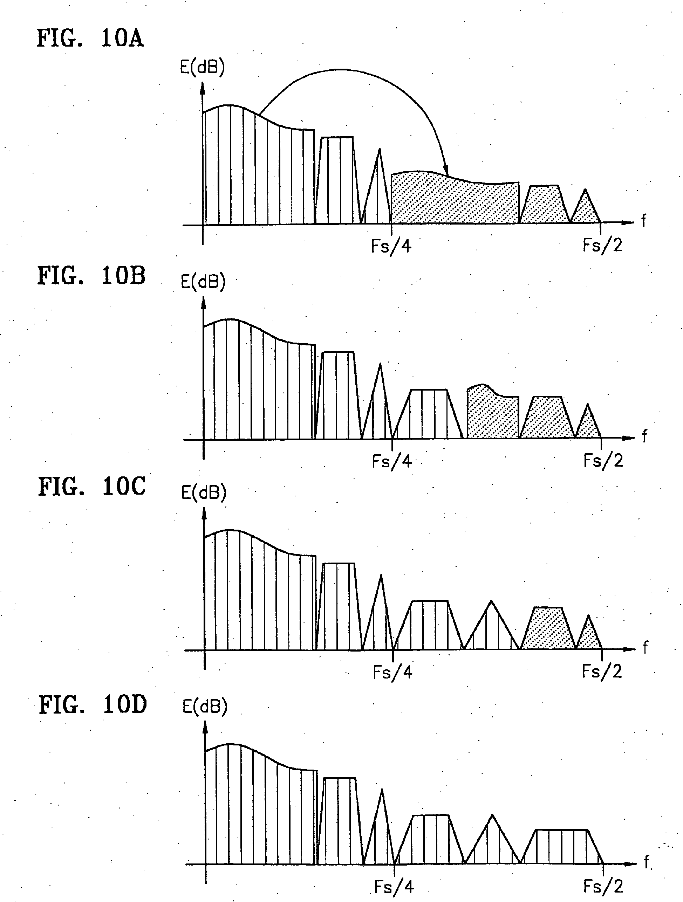

FIG. 10 is a view for explaining BWE decoding performed by the BWE decoder 9 in detail. Referring to FIG. 10, a striped portion denotes data decoded by the FGS decoder 8 and a dotted portion denotes data created by the BWE decoder 9. When all data within a quarter portion of a sampling frequency Fs belongs to a base layer, FIG. 10 (a) illustrates a case where only base band data is decoded by a decoding node, and FIGS. 10 (b), (c), and (d) illustrate a case where data corresponding to the base layer and at least one enhancement layer are decoded by the FGS decoder 8. In other words, the FGS decoder 8 is able to decode data so as to control a bit rate, and the BWE decoder 9 is able to create missing band data that is not decoded by the FGS decoder 8.

Encoding and decoding methods according to a preferred embodiment of the present invention will be described based on the above-described structure.

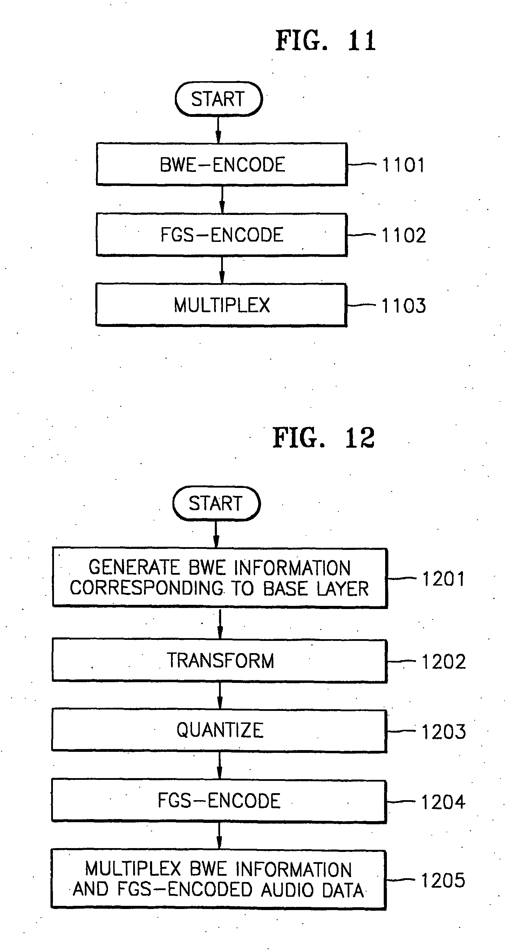

FIG. 11 is a flowchart for explaining an encoding method according to the present invention. Referring to FIG. 11, in step 1101, an encoding apparatus BWE-encodes digital data, outputs bandwidth-limited data, and generates BWE information. In step 1102, the coding apparatus encodes the bandwidth-limited data into a hierarchical structure having a base layer and at least one enhancement layer so as to control a bit rate. Here, the encoding apparatus encodes side information corresponding to the base layer, bit-sliced-encodes a plurality of quantization samples corresponding to the base layer, and encodes side information and quantization samples corresponding to a next enhancement layer until a plurality of predetermined layers are completely encoded. In step 1103, the encoding apparatus multiplexes the encoded bandwidth-limited data and the BWE information and then outputs a bitstream. Here, the encoding apparatus multiplexes the encoded bandwidth-limited data and the BWE information in such an order that a portion of the encoded bandwidth-limited data corresponding to the base layer is located, the BWE information is located, portions of the bandwidth-limited data corresponding to the remaining enhancement layers are located or in such an order that the BWE information is located, the portion of the encoded bandwidth-limited data corresponding to the base layer is located, and the portions of the encoded bandwidth-limited data corresponding to the remaining enhancement layers are located.

FIG. 12 is a flowchart for explaining an encoding method according to an embodiment of the present invention. Referring to FIG. 12, in step 1201, an encoding apparatus BWE-encodes audio data, outputs bandwidth-limited audio data, and generates BWE information corresponding to a base layer. The BWE information of the base layer is necessary for generating missing band audio data based on audio data corresponding to the base layer using a decoding node. The encoding apparatus encodes the bandwidth-limited audio data into a hierarchical structure having a base layer and at least one enhancement layer. In more detail, the encoding apparatus transforms audio data corresponding to each layer into bandwidth-limited audio data on a layer-by-layer basis in step 1202, quantizes the bandwidth-limited audio data in step 1203, and lossless-encodes the quantized audio data, and packages the lossless-encoded audio data into a hierarchical structure so as to a bit rate. In step 1205, the encoding apparatus multiplexes the encoded bandwidth-limited audio data and the BWE information and then outputs a bitstream. In more detail, the encoding apparatus multiplexes the encoded bandwidth-limited data and the BWE information in such an order than a portion of the encoded bandwidth-limited data corresponding to the base layer is located, the BWE information is located, portions of the encoded bandwidth-limited data corresponding to the remaining enhancement layers are located or in such an order that the BWE information is located, the portion of the encoded bandwidth-limited data corresponding to the base layer is located, and the portions of the encoded bandwidth-limited data corresponding to the remaining enhancement layers are located.

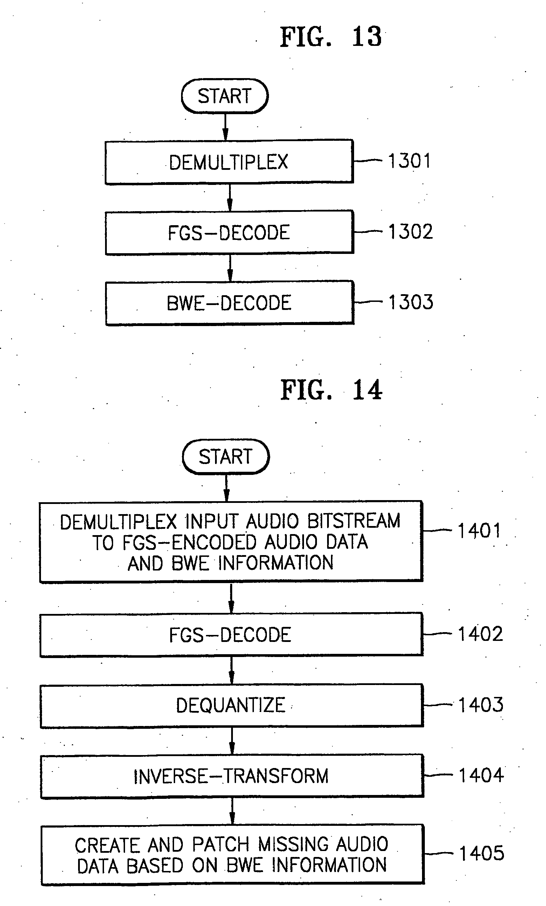

FIG. 13 is a flowchart for explaining a decoding method according to the present invention. Referring to FIG. 13, in step 1301, a decoding apparatus demultiplexes an input bitstream and samples bandwidth-limited data, which has been encoded into a hierarchical structure having a base layer and at least one enhancement layer, and BWE information. In other words, the decoding apparatus demultiplexes the input bitstream in such an order that it samples data corresponding to the base layer, BWE information, and data corresponding to the remaining enhancement layers from the input bitstream or samples the BWE information, the data corresponding to the base layer, and the data corresponding to the remaining enhancement layers from the input bitstream. In step 1302, the decoding apparatus decodes at least a portion of bandwidth-limited data corresponding to the base layer. In more detail, the decoding apparatus decodes side information corresponding to the base layer, bit-sliced-decodes a plurality of quantization samples corresponding to the base layer, and decodes side information and a plurality of quantization samples corresponding to a next enhancement layer until a plurality of predetermined layers are completely decoded. In step 1303, the decoding apparatus generates digital data in at least a portion of a band that is not covered by the portion of the bandwidth-limited data decoded in step 1302, based on the portion of the bandwidth-limited data decoded in step 1302 and with reference to the BWE information, and then patches the generated digital data to the decoded portion of the bandwidth-limited data.

FIG. 14 is a flowchart for explaining a decoding method according to an embodiment of the present invention. Referring to FIG. 14, in step 1401, a decoding apparatus demultiplexes an input audio bitstream and then samples bandwidth-limited audio data, which has been encoded into a hierarchical structure having a base layer and at least one enhancement layer, and BWE information. In other words, the decoding apparatus demultiplexes the input audio bitstream in such an order that it samples data corresponding to the base layer, BWE information, and data corresponding to the remaining enhancement layers from the input audio bitstream or in such an order that it samples the BWE information, the data corresponding to the base layer, and the data corresponding to the remaining enhancement layers from the input audio bitstream. The decoding apparatus decodes at least a portion of the bandwidth-limited audio data corresponding to the base layer so as to control a bit rate. In more detail, the decoding apparatus performs lossless-decoding up to a target layer in step 1402, performs dequantizaing in step 1403, and performs inverse-transforming in step 1404. In step 1405, the decoding apparatus generates audio data in at least a portion of a band that is not covered by the portion of the bandwidth-limited audio data obtained in step 1404, based on the portion of the bandwidth-limited audio data obtained in step 1404 and with reference to the BWE information.

As described above, the present invention can provide a bit rate scalable encoding and decoding method and apparatus by which high quality sound can be provided by restoring only a portion of a bitstream.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of encoding digital audio data, the method comprising:
bandwidth-extension-encoding (1101,1201) the digital audio data, outputting bandwidth-limited data, and generating bandwidth extension information;
encoding (1102,1204) the bandwidth-limited data into a hierarchical structure having a base layer and at least one enhancement layer so as to control a bit rate; and
multiplexing (1103,1205) the encoded bandwidth-limited audio data and the bandwidth extension information,
wherein the encoding comprises:
encoding side information containing scale factor information and coding model information corresponding to the base layer;
bit-sliced-encoding a plurality of quantization samples corresponding to the base layer with reference to the coding model information; and
repeating the encoding and bit-sliced-encoding for a next enhancement layer until a plurality of predetermined layers are completely coded.

2. The method of claim 1, wherein the encoded bandwidth-limited audio data and the bandwidth extension information is multiplexed such that a portion of the encoded bandwidth-limited audio data corresponding to the base layer, the bandwidth extension information, and portions of the bandwidth-limited audio data corresponding to the remaining enhancement layers are located in order.

3. The method of claim 1, wherein the encoded bandwidth-limited audio data and the bandwidth extension information is multiplexed such that the bandwidth extension information, a portion of the encoded bandwidth-limited audio data corresponding to the base layer, and portions of the bandwidth-limited audio data corresponding to the remaining enhancement layers are located in order.

4. A method of decoding digital audio data, the method comprising:
demultiplexing (1301,1401) an input bitstream and sampling bandwidth-limited audio data that is encoded into a hierarchical structure having a base layer and at least one enhancement layer and bandwidth extension information;
decoding (1302,1402) at least a portion of the bandwidth-limited audio data corresponding to the base layer; and
generating (1303,1405) digital data in at least a portion of a band that is not covered by the decoded portion of the bandwidth-limited audio data based on the decoded portion of the bandwidth-limited audio data and with reference to the bandwidth extension information, and then patching the generated digital audio data to the decoded portion of the bandwidth-limited audio data,
wherein the decoding (1302,1402) comprises:
decoding side information containing scale factor information and coding model information corresponding to the base layer;
bit-sliced-decoding a plurality of quantization samples corresponding to the base layer with reference to the coding model information; and
repeating the decoding and bit-sliced-decoding for a next enhancement layer until a plurality of predetermined layers are completely decoded.

5. The method of claim 4, wherein the input bitstream is demultiplexed such that audio data corresponding to the base layer, the bandwidth extension information, and data corresponding to the remaining enhancement layers are sampled from the input bitstream in order.

6. The method of claim 4, wherein the input bitstream is demultiplexed such that the bandwidth extension information, audio data corresponding to the base layer, and audio data corresponding to the remaining layers are sampled from the input bitstream in order.

7. An apparatus for encoding digital audio data, the apparatus comprising:
a bandwidth extension encoder (1) that is arranged to bandwidth-extension-encode the digital audio data, to output bandwidth-limited audio data, and to generate bandwidth extension information;
a fine grain scalability encoder (2) that is arranged to encode the bandwidth-limited audio data into a hierarchical structure having a base layer and at least one enhancement layer so as to control a bit rate; and
a multiplexer (3) that is arranged to multiplexe the encoded bandwidth-limited audio data and the bandwidth extension information;
wherein the fine grain scalability encoder (2) is arranged to encode side information containing scale factor information and coding model information corresponding to the base layer, to bit-sliced-encode a plurality of quantization samples corresponding to the base layer with reference to the coding model information, and to repeatedly encode side information containing scale factor information and coding model information and to bit-sliced-encode a plurality of quantization samples corresponding to a next enhancement layer until a plurality of predetermined layers are completely encoded.

8. The apparatus of claim 7, wherein the multiplexer (3) is arranged to multiplex the encoded bandwidth-limited audio data and the bandwidth extension information such that a portion of the encoded bandwidth-limited audio data corresponding to the base layer, the bandwidth extension information, and portions of the bandwidth-limited audio data corresponding to the remaining enhancement layers are located in order.

9. The apparatus of claim-7, wherein the multiplexer (3) is arranged to multiplex the encoded bandwidth-limited audio data and the bandwidth extension information such that the bandwidth extension information, a portion of the encoded bandwidth-limited audio data corresponding to the base layer, and portions of the bandwidth-limited audio data corresponding to the remaining enhancement layers are located in order.

10. An apparatus for decoding digital audio data, the apparatus comprising:
a demultiplexer (7) that is arranged to demultiplex an input bitstream and to sample bandwidth-limited audio data that is encoded into a hierarchical structure having a base layer and at least one enhancement layer and bandwidth extension information;
a fine grain scalability decoder (8) that is arranged to decode at least a portion of the sampled bandwidth-limited audio data corresponding to the base layer; and
a bandwidth extension decoder (9) that is arranged to generate digital audio data in at least a portion of a band that is not covered by the decoded portion of the bandwidth-limited audio data based on the decoded portion of the bandwidth-limited audio data and with reference to the bandwidth extension information and to patch the generated digital audio data to the decoded portion of the bandwidth-limited audio data,
wherein the fine grain scalability decoder (8) is arranged to decode side information containing scale factor information and coding model information corresponding to the base layer, to bit-sliced-decode a plurality of quantization samples corresponding to the base layer with reference to the coding model information, and to repeatedly decode side information containing scale factor information and coding model information and to bit-sliced-decode a plurality of quantization samples with reference to the coding model information corresponding to a next enhancement layer until a plurality of predetermined layers are completely decoded.

11. The apparatus of claim 10, wherein the demultiplexer (9) is arranged to demultiplex the input bitstream such that data corresponding to the base layer, the bandwidth extension information, and data corresponding to the remaining enhancement layers are sampled from the bitstream in order.

## Patentansprüche

1. Verfahren zum Kodieren digitaler Audiodaten, wobei das Verfahren umfasst:
Bandbreitenerweiterungskodieren (1101, 1201) der digitalen Audiodaten, Ausgeben von bandbreitenbegrenzten Daten und Erzeugen von Bandbreitenerweiterungsinformationen,
Kodieren (1102, 1204) der bandbreitenbegrenzten Daten in eine hierarchische Struktur mit einer Basisschicht und mindestens einer Verstärkungsschicht, um eine Bitrate zu steuern, und
Multiplexen (1103, 1205) der kodierten bandbreitenbegrenzten Audiodaten und der Bandbreitenerweiterungsinformationen,
wobei das Kodieren umfasst:
Kodieren von Hilfsinformationen, die Skalenfaktoreninformationen und Kodiermodellinformationen enthalten, die der Basisschicht zugeordnet sind,
Bit-Slice-Kodieren einer Mehrzahl von Quantisierungsabtastungen, die der Basisschicht zugeordnet sind, mit Bezugnahme zu Kodiermodellinformationen, und
Wiederholen der Kodierung und Bit-Slice-Kodierung für eine nächste Verstärkungsschicht, bis eine Mehrzahl von vorgegebenen Schichten vollständig kodiert sind.

2. Verfahren nach Anspruch 1, wobei die kodierten bandbreitenbegrenzten Audiodaten und die Bandbreitenerweiterungsinformationen derart gemultiplext werden, dass ein Teil der kodierten bandbreitenbegrenzten Audiodaten, die der Basisschicht zugeordnet sind, die Bandbreitenerweiterungsinformationen und Teile der bandbreitenbegrenzten Audiodaten, die den übrigen Verstärkungsschichten zugeordnet sind, in Abfolge angeordnet werden.

3. Verfahren nach Anspruch 1, wobei die kodierten bandbreitenbegrenzten Audiodaten und die Bandbreitenerweiterungsinformationen derart gemultiplext werden, dass die Bandbreitenerweiterungsinformationen, ein Teil der kodierten bandbreitenbegrenzten Audiodaten, die der Basisschicht zugeordnet sind, und Teile der bandbreitenbegrenzten Audiodaten, die den übrigen Verstärkungsschichten zugeordnet sind, in Abfolge angeordnet werden.

4. Verfahren zum Dekodieren digitaler Audiodaten, wobei das Verfahren umfasst:
Demultiplexen (1301, 1401) eines eingegebenen Bitstroms und Abtasten von bandbreitenbegrenzten Audiodaten, die in eine hierarchische Struktur mit einer Basisschicht und mindestens einer Verstärkungsschicht und Bandbreitenerweiterungsinformationen kodiert sind,
Dekodieren (1302, 1402) mindestens eines Teils der bandbreitenbegrenzten Audiodaten, die der Basisschicht zugeordnet sind, und
Erzeugen (1303, 1405) von digitalen Daten in mindestens einem Teil eines Bandes, das nicht von dem dekodierten Teil der bandbreitenbegrenzten Audiodaten abgedeckt ist, basierend auf dem dekodierten Teil der bandbreitenbegrenzten Audiodaten und mit Bezugnahme zu den Bandbreitenerweiterungsinformationen, und dann Einsetzen der erzeugten digitalen Audiodaten in den dekodierten Teil der bandbreitenbegrenzten Audiodaten,
wobei das Dekodieren (1302, 1402) umfasst:
Dekodieren von Hilfsinformationen, die Skalenfaktoreninformationen und Kodiermodellinformationen enthalten, die der Basisschicht zugeordnet sind,
Bit-Slice-Dekodieren einer Mehrzahl von Quantisierungsabtastungen, die der Basisschicht zugeordnet sind, mit Bezugnahme zu Kodiermodellinformationen und
Wiederholen der Dekodierung und Bit-Slice-Dekodierung für eine nächste Verstärkungsschicht, bis eine Mehrzahl von vorgegebenen Schichten vollständig dekodiert sind.

5. Verfahren nach Anspruch 4, wobei der eingegebene Bitstrom derart gedemultiplext wird, dass Audiodaten, die der Basisschicht zugeordnet sind, die Bandbreitenerweiterungsinformationen und Daten, die den übrigen Verstärkungsschichten zugeordnet sind, in Abfolge aus dem eingegebenen Bitstrom abgetastet werden.

6. Verfahren nach Anspruch 4, wobei der eingegebene Bitstrom derart gedemultiplext wird, dass die Bandbreitenerweiterungsinformationen, Audiodaten, die der Basisschicht zugeordnet sind, und Audiodaten, die den übrigen Schichten zugeordnet sind, in Abfolge aus dem eingegebenen Bitstrom abgetastet werden.

7. Vorrichtung zum Kodieren digitaler Audiodaten, wobei die Vorrichtung umfasst:
einen Bandbreitenerweiterungskodierer (1), der dazu ausgebildet ist, dass er die digitalen Audiodaten einer Bandbreitenerweiterungskodierung unterzieht, bandbreitenbegrenzte Audiodaten ausgibt und Bandbreitenerweiterungsinformationen erzeugt,
einen Kodierer (2) mit Feinkornskalierbarkeit, der dazu ausgebildet ist, dass er die bandbreitenbegrenzten Audiodaten in eine hierarchische Struktur mit einer Basisschicht und mindestens einer Verstärkungsschicht kodiert, um eine Bitrate zu steuern, und
einen Multiplexer (3), der dazu ausgebildet ist, dass er die kodierten bandbreitenbegrenzten Audiodaten und die Bandbreitenerweiterungsinformationen multiplext,
wobei der Kodierer (2) mit Feinkornskalierbarkeit dazu ausgebildet ist, dass er Hilfsinformationen kodiert, die Skalenfaktoreninformationen und Kodiermodellinformationen enthalten, die der Basisschicht zugeordnet sind, eine Mehrzahl von Quantisierungsabtastungen, die der Basisschicht zugeordnet sind, mit Bezugnahme zu den Kodiermodellinformationen einer Bit-Slice-Kodierung unterzieht und Hilfsinformationen, die Skalenfaktoreninformationen und Kodiermodellinformationen enthalten, wiederholt kodiert und eine Mehrzahl von Quantisierungsabtastungen, die einer nächsten Verstärkungsschicht zugeordnet sind, einer Bit-Slice-Kodierung unterzieht, bis eine Mehrzahl von vorgegebenen Schichten vollständig kodiert sind.

8. Vorrichtung nach Anspruch 7, wobei der Multiplexer (3) dazu ausgebildet ist, dass er die kodierten bandbreitenbegrenzten Audiodaten und die Bandbreitenerweiterungsinformationen derart multiplext, dass ein Teil der kodierten bandbreitenbegrenzten Audiodaten, die der Basisschicht zugeordnet sind, die Bandbreitenerweiterungsinformationen und Teile der bandbreitenbegrenzten Audiodaten, die den übrigen Verstärkungsschichten zugeordnet sind, in Abfolge angeordnet sind.

9. Vorrichtung nach Anspruch 7, wobei der Multiplexer (3) dazu ausgebildet ist, dass er die kodierten bandbreitenbegrenzten Audiodaten und die Bandbreitenerweiterungsinformationen derart multiplext, dass die Bandbreitenerweiterungsinformationen, ein Teil der kodierten bandbreitenbegrenzten Audiodaten, die der Basisschicht zugeordnet sind, und Teile der bandbreitenbegrenzten Audiodaten, die den übrigen Verstärkungsschichten zugeordnet sind, in Abfolge angeordnet sind.

10. Vorrichtung zum Dekodieren digitaler Audiodaten, wobei die Vorrichtung umfasst:
einen Demultiplexer (7), der dazu ausgebildet ist, dass er einen eingegebenen Bitstrom demultiplext und bandbreitenbegrenzte Audiodaten,
die in eine hierarchische Struktur mit einer Basisschicht und mindestens einer Verstärkungsschicht kodiert sind, und Bandbreitenerweiterungsinformationen abtastet,
einen Dekodierer (8) mit Feinkornskalierbarkeit, der dazu ausgebildet ist, dass er mindestens einen Teil der abgetasteten bandbreitenbegrenzten Audiodaten dekodiert, die der Basisschicht zugeordnet sind, und
einen Bandbreitenerweiterungsdekodierer (9), der dazu ausgebildet ist, dass er digitale Audiodaten in mindestens einem Teil eines Bandes erzeugt, das nicht von dem dekodierten Teil der bandbreitenbegrenzten Audiodaten abgedeckt ist, basierend auf dem dekodierten Teil der bandbreitenbegrenzten Audiodaten und mit Bezugnahme zu den Bandbreitenerweiterungsinformationen und die erzeugten digitalen Audiodaten in den dekodierten Teil der bandbreitenbegrenzten Audiodaten einsetzt,
wobei der Dekodierer (8) mit Feinkornskalierbarkeit dazu ausgebildet ist, dass er Hilfsinformationen, die Skalenfaktoreninformationen und Kodiermodellinformationen enthalten, die der Basisschicht zugeordnet sind, dekodiert, eine Mehrzahl von Quantisierungsabtastungen, die der Basisschicht zugeordnet sind, mit Bezugnahme zu den Kodiermodellinformationen einer Bit-Slice-Dekodierung unterzieht und Hilfsinformationen, die Skalenfaktoreninformationen und Kodiermodellinformationen enthalten,
wiederholt dekodiert und eine Mehrzahl von Quantisierungsabtastungen mit Bezugnahme zu den Kodiermodellinformationen, die einer nächsten Verstärkungsschicht zugeordnet sind, einer Bit-Slice-Dekodierung unterzieht, bis eine Mehrzahl von vorgegebenen Schichten vollständig dekodiert sind.

11. Vorrichtung nach Anspruch 10, wobei der Demultiplexer (9) dazu ausgebildet ist, dass er den eingegebenen Bitstrom derart demultiplext, dass Daten, die der Basisschicht zugeordnet sind, die Bandbreitenerweiterungsinformationen und Daten, die den übrigen Verstärkungsschichten zugeordnet sind, in Abfolge aus dem eingegebenen Bitstrom abgetastet werden.

## Revendications

1. Procédé destiné à coder des données audio numériques, le procédé comprenant les étapes ci-dessous consistant à :
coder par extension de bande passante (1101, 1201) les données audio numériques, générer en sortie des données limitées en bande passante, et générer des informations d'extension de bande passante ;
coder (1102, 1204) les données limitées en bande passante dans une structure hiérarchique présentant une couche de base et au moins une couche d'optimisation, de manière à commander un débit binaire; et
multiplexer (1103, 1205) les données audio codées limitées en bande passante et les informations d'extension de bande passante ;
dans lequel l'étape de codage comprend les étapes ci-dessous consistant à :
coder des informations secondaires contenant des informations de facteur d'échelle et des informations de modèle de codage correspondant à la couche de base ;
coder par le biais d'un codage de tranches de bits une pluralité d'échantillons de quantification correspondant à la couche de base en référence aux informations de modèle de codage ; et
répéter l'étape de codage et de codage par tranches de bits pour une couche d'optimisation successive jusqu'à ce qu'une pluralité de couches prédéterminées soit entièrement codée.

2. Procédé selon la revendication 1, dans lequel les données audio codées limitées en bande passante et les informations d'extension de bande passante sont multiplexées, de sorte qu'une partie des données audio codées limitées en bande passante correspondant à la couche de base, les informations d'extension de bande passante, et des parties des données audio limitées en bande passante correspondant aux couches d'optimisation restantes sont localisées en suivant un ordonnancement.

3. Procédé selon la revendication 1, dans lequel les données audio codées limitées en bande passante et les informations d'extension de bande passante sont multiplexées, de sorte que les informations d'extension de bande passante, une partie des données audio codées limitées en bande passante correspondant à la couche de base, et des parties des données audio limitées en bande passante correspondant aux couches d'optimisation restantes sont localisées en suivant un ordonnancement.

4. Procédé destiné à décoder des données audio numériques, le procédé comprenant les étapes ci-dessous consistant à :
démultiplexer (1301, 1401) un flux binaire d'entrée et échantillonner les données audio limitées en bande passante qui sont codées dans une structure hiérarchique présentant une couche de base et au moins une couche d'optimisation et les informations d'extension de bande passante ;
décoder (1302, 1402) au moins une partie des données audio limitées en bande passante correspondant à la couche de base ; et
générer (1303,1405) des données numériques dans au moins une partie d'une bande qui n'est pas couverte par la partie décodée des données audio limitées en bande passante, sur la base de la partie décodée des données audio limitées en bande passante et en référence aux informations d'extension de bande passante, et appliquer ensuite les données audio numériques générées à la partie décodée des données audio limitées en bande passante ;
dans lequel l'étape de décodage (1302, 1402) comprend les étapes ci-dessous consistant à :
décoder des informations secondaires contenant des informations de facteur d'échelle et des informations de modèle de codage correspondant à la couche de base ;
décoder par le biais d'un décodage de tranches de bits une pluralité d'échantillons de quantification correspondant à la couche de base en référence aux informations de modèle de codage ; et
répéter l'étape de décodage et de décodage par tranches de bits pour une couche d'optimisation successive jusqu'à ce qu'une pluralité de couches prédéterminées soit entièrement décodée.

5. Procédé selon la revendication 4, dans lequel le flux binaire d'entrée est démultiplexé, de sorte que les données audio correspondant à la couche de base, les informations d'extension de bande passante, et les données correspondant aux couches d'optimisation restantes sont échantillonnées à partir du flux binaire d'entrée en suivant un ordonnancement.

6. Procédé selon la revendication 4, dans lequel le flux binaire d'entrée est démultiplexé, de sorte que les informations d'extension de bande passante, les données audio correspondant à la couche de base, et les données audio correspondant aux couches restantes sont échantillonnées à partir du flux binaire d'entrée en suivant un ordonnancement.

7. Dispositif destiné à coder des données audio numériques, le dispositif comprenant :
un codeur par extension de bande passante (1) lequel est agencé de manière à coder par extension de bande passante les données audio numériques, à générer en sortie des données limitées en bande passante, et à générer des informations d'extension de bande passante ;
un codeur échelonnable à granularité fine (2) lequel est agencé de manière à coder les données limitées en bande passante dans une structure hiérarchique présentant une couche de base et au moins une couche d'optimisation, de manière à commander un débit binaire ; et
un multiplexeur (3) lequel est agencé de manière à multiplexer les données audio codées limitées en bande passante et les informations d'extension de bande passante ;
dans lequel le codeur échelonnable à granularité fine (2) est agencé de manière à coder des informations secondaires contenant des informations de facteur d'échelle et des informations de modèle de codage correspondant à la couche de base, à coder par le biais d'un codage de tranches de bits une pluralité d'échantillons de quantification correspondant à la couche de base en référence aux informations de modèle de codage, et à coder de manière répétée des informations secondaires contenant des informations de facteur d'échelle et des informations de modèle de codage, et à coder par le biais d'un codage de tranches de bits une pluralité d'échantillons de quantification correspondant à une couche d'optimisation successive, jusqu'à ce qu'une pluralité de couches prédéterminées soit entièrement codée.

8. Dispositif selon la revendication 7, dans laquelle le multiplexeur (3) est agencé de manière à multiplexer les données audio codées limitées en bande passante et les informations d'extension de bande passante, de sorte qu'une partie des données audio codées limitées en bande passante correspondant à la couche de base, les informations d'extension de bande passante, et des parties des données audio limitées en bande passante correspondant aux couches d'optimisation restantes sont localisées en suivant un ordonnancement.

9. Dispositif selon la revendication 7, dans laquelle le multiplexeur (3) est agencé de manière à multiplexer les données audio codées limitées en bande passante et les informations d'extension de bande passante, de sorte que les informations d'extension de bande passante, une partie des données audio codées limitées en bande passante correspondant à la couche de base, et des parties des données audio limitées en bande passante correspondant aux couches d'optimisation restantes sont localisées en suivant un ordonnancement.

10. Dispositif destiné à décoder des données audio numériques, le dispositif comprenant :
un démultiplexeur (7) lequel est agencé de manière à démultiplexer un flux binaire d'entrée et à échantillonner les données audio limitées en bande passante qui sont codées dans une structure hiérarchique présentant une couche de base et au moins une couche d'optimisation et les informations d'extension de bande passante ;
un décodeur échelonnable à granularité fine (8) lequel est agencé de manière à décoder au moins une partie des données audio limitées en bande passante échantillonnées correspondant à la couche de base ; et
un décodeur par extension de bande passante (9) lequel est agencé de manière à générer des données numériques dans au moins une partie d'une bande qui n'est pas couverte par la partie décodée des données audio limitées en bande passante sur la base de la partie décodée des données audio limitées en bande passante et en référence aux informations d'extension de bande passante, et à appliquer les données audio numériques générées à la partie décodée des données audio limitées en bande passante ;
dans lequel le décodeur échelonnable à granularité fine (8) est agencé de manière à décoder les informations secondaires contenant les informations de facteur d'échelle et les informations de modèle de codage correspondant à la couche de base, à décoder par le biais d'un décodage de tranches de bits une pluralité d'échantillons de quantification correspondant à la couche de base en référence aux informations de modèle de codage, et à décoder de manière répétée les informations secondaires contenant les informations de facteur d'échelle et les informations de modèle de codage, et à décoder par le biais d'un décodage de tranches de bits une pluralité d'échantillons de quantification en référence aux informations de modèle de codage correspondant à une couche d'optimisation successive, jusqu'à ce qu'une pluralité de couches prédéterminées sont entièrement décodée.

11. Dispositif selon la revendication 10, dans lequel le démultiplexeur (9) est agencé de manière à démultiplexer le flux binaire d'entrée, de sorte que les données correspondant à la couche de base, les informations d'extension de bande passante, et les données correspondant aux couches d'optimisation restantes sont échantillonnées à partir du flux binaire en suivant un ordonnancement.
